# EUROPEAN PATENT APPLICATION

(11) **EP 2 640 045 A1**
(43) Date of publication of application: **18.09.2013**
(21) Application number: 12175752.0
(22) Date of filing: 10.07.2012
(51) Int. Cl.: H04M 1/2745, G06Q 10/00

(54) **Method and System for Transferring Mobile Device Contact Information**

(30) Priority: 16.03.2012 US 201213422200
(71) Applicant: Mitel Networks Corporation, Ottawa, ON K2K 2W7 (CA)
(72) Inventor: Hillier, Peter Matthew, Kanata, Ontario K2T 0E3 (CA); Arruda, Patrice, Ottawa, Ontario K2J 0P2 (CA)
(74) Representative: Hewett, Jonathan Michael Richard

(57) **Abstract**

A system and method for providing and updating contact information for device users are provided. The system includes a first device having a first contact application and a second device having a second contact application. Contact information for the first device can be updated on the second device by providing the contact information from the first contact application and writing the information on the second device using the second contact application.

## Description

The present invention generally relates to communication systems and methods. More particularly, but not exclusively, the invention relates to systems and methods for transferring contact information for a mobile device user.

A person may desire to change his or her contact information (e.g., a phone number, email address, or the like) for several reasons. For example, a person may be travelling to another country and wish to switch to a local phone number for mobile voice and data communications. Similarly, a person may change a home or mobile device number, and a preferred number may depend on a user's location, the time of day, and/or preferred device.

Contact information for device users, such as mobile device users, is often entered and managed by the owner of the device. For example, the owner of a device typically enters and manages contact information for others, such as friends, coworkers, and relatives, which is stored on his or her device. If a user contact, such as one of the friends, coworkers, or relatives, changes their contact information-e.g., a phone number, address, email address, social media user name, or the like-the device user typically must be aware of the contact information change and then enter the updated information onto a device or into a program that transfers the information onto the device. If the device user is unaware of the change in the information associated with one or more of his or her contacts, the device user may no longer have the requisite information to communicate with the contact. Furthermore, if a contact has one or more phone numbers, email addresses, social media contacts, or the like, the device user may not know the best mode or specific contact information to use to reach the contact at a given time.

Once information for a particular contact is stored on a device, the information may be periodically synchronized to other devices using a centralized server. In this case, multiple management interfaces, such as email, the Web, or any suitable online technology may be utilized for the synchronization, but the contact information is owned and managed by the user. Using this technique increases security measurements for the contact information. To synchronize the contact information on multiple user devices, such systems generally require that all devices managed by the user run the same application, and such systems still require that the user knows and then enters the revised contact information.

Various other centralized systems for maintaining and updating contact information currently exist. Such systems generally require a centralized system to query a contact periodically to determine whether contact information associated with that contact has changed, and if so, send the user a notification of the change. Alternatively, when a contact changes contact information, the centralized system may be notified, and in turn, the user may be notified of the change in the contact information. Although this system can work relatively well for periodic updates in contact information, the system requires a centralized system and may require the user to take action to effect the changes in the contact information.

Google Voice offers another alternative to facilitating communication with a user's contacts, even if the contacts change a phone number. Google Voice allows multiple phone numbers to be associated with a single phone number, such that the contact can be reached simply by calling a single Google Voice number. Although this system may facilitate communicating with a contact via phone, this system does not facilitate communication via other modes, such as SMS, email, social media, and the like.

Social networking applications and other Web-based applications can also be used by a contact to share contact information and/or to update contact information. These applications generally require the contact to update contact information by logging into the application on a server and to change the contact information. This requires a connection to the internet to enable a connection to a web server associated with the application, and in some areas, access to social media sites may be blocked due to security precaution. In addition, these systems are not generally integrated with a mobile device.

It is the person referenced by particular contact information that is best suited to provide their contact updates and preferred method of contact. Such updates may occur several times a day, in real time, and be dependent on time of day, location, environment or other activity. Accordingly, improved methods and systems for contacts to provide updated or preferred contact information to other device users, without requiring those users to query the contacts or to manually input or select the contact information, are desired.

According to an aspect of the present invention, there is provided a system for updating contact information associated with a user, the system comprising a first device comprising a first contact application comprising a first contact list, and a second device comprising a second contact application comprising a second contact list, wherein the first contact application provides first contact information to the second contact application using direct addressing.

According to another aspect of the present invention, there is provided a method of providing contact information, the method comprising the steps of enabling a first contact application on a first device, updating first contact information using the first contact application, checking the status of a second contact application on a second device, and if the second contact application is enabled on the second device, updating the first contact information on the second contact application, wherein the updating is performed using direct addressing.

According to another aspect of the present invention, there is provided a method of providing contact information, the method comprising the steps of providing first contact information corresponding to a first device to a server, enabling a contact application on a second device, the contact application comprising the first contact information, checking the first contact information on the server, determining whether the first contact information on the server and the first contact information on the second device are the same, and if the first contact information on the server and the first contact information on the second device are not the same, updating the first contact information on the second device.

Optional features are set out in the dependent claims.

The subject matter of the present invention is particularly pointed out and distinctly claimed in the concluding portion of the specification. A more complete understanding of the present invention, however, may best be obtained by referring to the detailed description and claims when considered in connection with the drawing figures, wherein like numerals denote like elements and wherein:
FIG. 1 illustrates a communication system in accordance with various exemplary embodiments of the invention;
FIG. 2 illustrates a method of providing contact information to a device in accordance with various exemplary embodiments of the invention;
FIG. 3 illustrates a method of providing contact information to a device in accordance with additional exemplary embodiments of the invention; and
FIG. 4 illustrates a method of providing contact information to a device in accordance with yet additional exemplary embodiments of the invention.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

The description of exemplary embodiments of the present invention provided below is merely exemplary and is intended for purposes of illustration only; the following description is not intended to limit the scope of the invention disclosed herein. Moreover, recitation of multiple embodiments having stated features is not intended to exclude other embodiments having additional features or other embodiments incorporating different combinations of the stated features. Combinations of compatible features of different embodiments, which are not referred to explicitly but which would be understood by those skilled in the art, are also intended to fall within the scope of the invention.

The present invention provides a system and method for providing and updating contact information, such as phone numbers, email addresses, social media contacts, and the like, on a device. The system and method described herein can be used to allow a contact (user) to provide contact information and updates to one or more devices, such that the users of such devices do not have to monitor the contact's information or manually enter the information. In accordance with various exemplary embodiments, an application is provided which provides contact information, using direct addressing, such as internet protocol routing, to one or more user devices. By way of example, the system and method may include use of a Long Term Evolution (LTE) network, which allows for persistent IP addresses for mobile devices. The persistent IP address allows users to push information directly to other users, if the users employ the contact application described below. Thus, the information can be shared between users with no additional cost. Applications may be used to translate phone numbers associated with mobile devices to IP addresses. In this case, the application may require a connection to the internet to query the phone number of a particular device. Use of direct addressing allows the system and method of the invention to operate without frequent end-user application synchronization to update application information, which may be required with various prior-art systems.

The system and method provided herein do not require a user that receives the contact information to run the same email, phone, SMS, or social media program, as the user that sends the information, and updates of the contact information to a device may be transparent to the user. This allows a user to communicate with a contact by selecting a mode of communication (e.g., email, phone, SMS, social media, or the like), and connecting to the contact using the selected mode. The user does not need to know the email address, phone number, etc. associated with the contact, because the contact provided the information directly to the user's device, and indeed such contact information may be hidden from the user.

In accordance with exemplary embodiments, the contact information is owned and managed by the contact, not by users that use the contact information to communicate with the contact. This allows the user to control the contact information and how other users can communicate with the contact. In accordance with various aspects, the users that receive the contact information may not have authorization to modify or overwrite the contact information that has been specified by the person to whom the contact information refers (the contact).

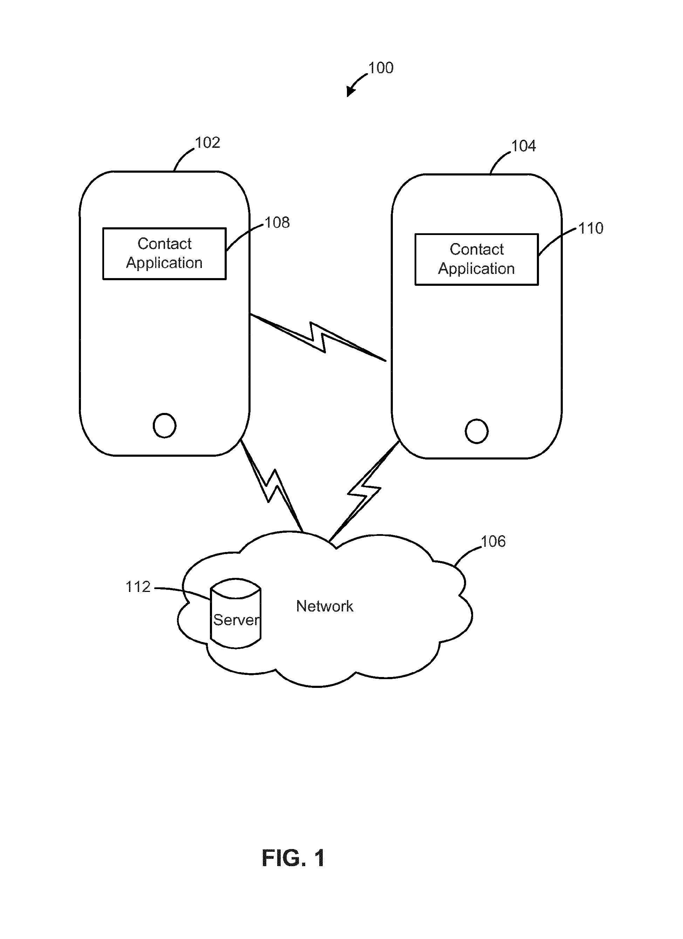

FIG. 1 illustrates an exemplary system 100 in accordance with various embodiments of the invention. System 100 includes a first device 102, a second device 104, and optionally a communication network 106, including a server 112. In operation, contact information for a contact (e.g., user of device 102) is provided to device 104. As set forth in more detail below, the contact information may be provided to or deleted from device 104 by pushing information from device 102 to device 104, by publishing information from a server (e.g., server 112) to device 104, or, by pulling information from a server by device 104 prior to communication with device 102, and the method of providing the contact information may be selected by the owner of the information.

System 100 may be used to provide users with near real time updates of contact information. This facilitates using the most cost-effective means for communication with the contact. For example, the system and method can be used to avoid tolls by routing calls to local network numbers (e.g., PBX extension, local PSTN number, and the like) to users, for call forwarding, and the like.

Devices 102, 104 may be mobile devices or devices are connected to network 106 by a medium (i.e. wireless or wired). For example, either one or both of devices 102 and 104 may include smart phones, tablet computers, personal digital assistants, phones, personal computers, or any other device suitable for communication using system 100. By way of examples, devices 102 and 104 may be a smartphone running Android, iOS, Windows, Symbian, Blackberry OS, Linux operating systems, or similar operating systems, which is capable of running the client program described in more detail below. Although illustrated with only two devices, system 100 may include any suitable number of devices, which may be coupled to one or more networks 106. For example, system 100 may include a large number of users and a set of clustered servers to facilitate transfer of contact information between the users.

In accordance with exemplary embodiments of the invention, each device 102 and 104 includes a contact application 108, 110 to send and/or receive contact information and optionally a security key, to and/or from another device. Using the security key enables users to verify or authenticate (or not) communications from other users for pre-defined acceptance of communication.

Contact application 108, 110 is used to create, store, and provide personal contact information and optionally a security key. Contact application 108, 110 may also store additional identifiers associated with users that may be used by various applications (e.g., phone, chat, email, and the like.

In accordance with exemplary embodiments, contact application 108, 110 is a native application and includes a native contact list, which resides on the respective device 102, 104. In accordance with various aspects of these embodiments, contact application 108, 110 is capable and may be used to synchronize some or all of a user's contact information (name, phone number, email address, and the like) to some or all of the user's contacts. The system and method are not limited to being capable of updating contact information only to those contacts that have the same social media service, phone application, or the like. Rather, because the contact application as described herein is native to the device, the program operates independently of such other applications. Furthermore, because the application is native, a user does not need to logon to another service or create a unique ID associated with the contact information-in contrast to some other services, such as social media and email services, which require such user IDs and require changing of the user ID to change the corresponding contact information (for authentication). Contact application 108, 110 may provide an authentication technique to prevent unwanted alterations to the contact information. Contact application 108, 110 may be further configured to automatically provide contact information corresponding to the lowest cost and/or most preferred contact information for a particular location.

Communication network 106 may include a local area network (LAN), a wide area network, a personal area network, a campus area network, a metropolitan area network, a global area network, with different type of mediums (fiber optics, copper, electromagnetic field) or the like. Network 106 may be coupled to devices 102, 104 using an Ethernet connection, other wired connections, a Wi-Fi interface, other wireless interfaces, or the like. Network 106 may be coupled to other networks and/or to other devices typically coupled to networks.

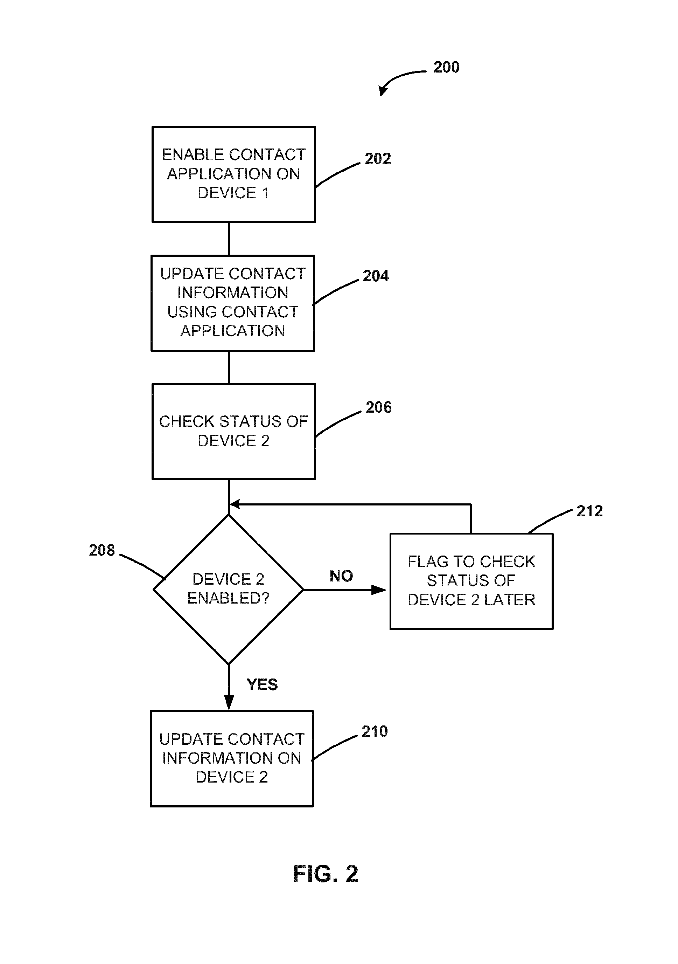

FIG. 2 illustrates a method 200 of providing contact information to a device, using direct addressing, in accordance with various exemplary embodiments of the invention. Method 200 includes the steps of enabling a contact application on a first device (step 202), entering or updating first user contact information using the contact application (step 204), checking the status of a second device (step 206), determining whether the contact application on the second device is enabled (step 208), if the contact application on the second device is enabled, transferring the contact information to the contact application on the second device (step 210), and if the contact application on the second device is not enabled, flagging the first device to check the status of the second device at a later time (step 212).

During step 202, a contact application (e.g., contact application 108) is enabled. As noted above, contact application 108 may be a native application on device 102 and may automatically enable when powering on device 102.

Contact information (e.g., preferred name, phone number, email addresses, social media contacts, and the like) corresponding to a user of device 102 is entered on device 102 during step 204. The information entered may include new contact information or may include updates or revisions to existing contact information. The contact information may be entered manually or wholly or partially imported from another source-e.g., another contact application. For example, when travelling to another country or area, a contact can update his or her contact information to include a local or toll-free number for that area, a VoIP number, allowing SIP protocol to avoid unwanted charges, or a local PBX extension. The contact information is saved in a contact list of contact application 108.

During step 206, contact application 108 scans each contact of the first user in a contact directory and determines whether contact application 110 is enabled and ready to receive contact information for the first user. In accordance with exemplary embodiments, contact information may be provided to only a subset or group of contacts within the contact list or directory. For example, the update may be intended only for coworkers, family, friends, contacts within a certain region or area, or the like. In this case, during step 206, only those devices to be updated need to be scanned for possibly updating the contact information. By way of particular example, the devices may be scanned using point-to-point signalling using LTE IP addressing. Alternatively, all contacts may be scanned, and updates may be provided to only those devices within a specified group.

If it is determined during step 208 that contact application 110 is enabled, the contact information corresponding to the first user is written into contact application 110 during step 210. During this step, the contact information may also be written to other programs or locations on device 104. For example, an updated phone number may be written to a dialler program and/or a call list.

Method 200 may require authentication before contact information from application 108 is transmitted to application 110. An exemplary authentication process is described in more detail below.

If it is determined during step 208 that contact application 110 is not active or available, method 200 flags the status of the information to check the status of application 110 at a later time during step 212. If the contact is not available for a specified amount of time, the contact may be removed from device 1 to end process 200. Steps 208 and 212 may be repeated until the contact application on the second device is enabled and the contact information is written to the second device using the contact application in step 210. By way of examples, a ping model or presence model may be used to detect when the second device contact application is available and then transmit the information at that time.

As noted above, application 108 may require authentication prior to transmitting contact information to application 110, to ensure that only the owner of the contact information is authorized to change the information on other devices. In this case, a security key may be passed between the applications to authenticate the communication. The security key may include a defined public key infrastructure (PKI) model based on certificates, a pre shared key (PSK) shared between a contact in contact application 108 (which can be generated for each contact update) and a person, or any other suitable certificate that can be passed between and verified by users. In accordance with various embodiments, the security key is provided by and managed by the user to which the security key is associated. In accordance with further aspects, the security key is time limited, so that communications/transfers from a user are able to be authenticated only for the specified amount of time.

The security key can be associated with individual contacts, a group of contacts, or multiple groups of contacts. When the security key identifies a group or groups, the security key facilitates classification techniques to sort communications and take actions based on classifications.

A user can change his or her security key at any time to prevent unwanted communication. If desired, the new security key can be pushed to all or some of the previously authenticated users stored in contact application 108.

In accordance with various exemplary embodiments of the invention, when a user (e.g., second user) attempts to initiate communication with another user (e.g., first user), if the first user authenticates the security key associated with the first user and transmitted from the second user to the first user, then communication between the first user and the second user commences-i.e., contact information is provided to application 110. In accordance with various aspects of these embodiments, contact application 108, 110 provides per contact storage of the security key and connects with the other user in advance of communication once the security key is authenticated.

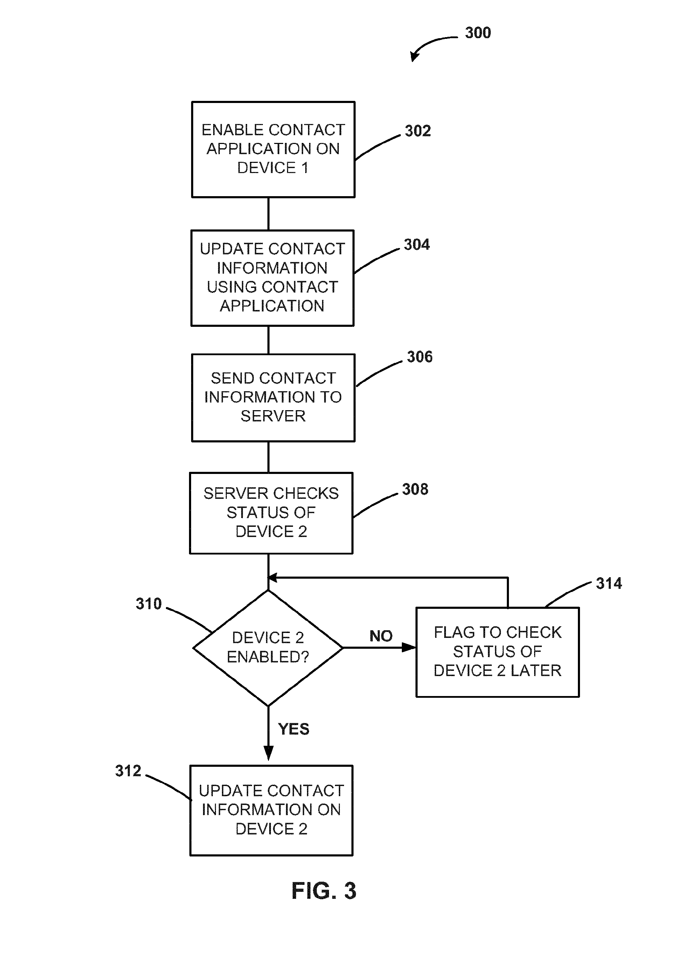

FIG. 3 illustrates a method 300 of providing contact information to a device in accordance with additional exemplary embodiments of the invention. Method 300 can be used for a variety of applications, including providing private PBX extensions, public direct inward dialling (DID) mapping to PBX extensions, and the like. Alternatively, method 300 can be used to provide a private IP address and port (or Session Initiation Protocol (SIP) proxy), or a publically addressable network address translated (NAT'ed) address for external usage. This could be used to allow VoIP applications to communicate peer to peer over private networks, which allows users to bypass carrier tolls. For example, when registered to an SIP provider, e.g., via Wi-Fi, all or selected contacts can be provided the SIP contact information, and users can communicate directly-e.g., using VoIP.

Method 300 includes the steps of enabling a contact application on a first device (step 302), entering or updating first user contact information using the contact application (step 304), sending contact information to a server (step 306), checking the status of a second device (step 308), determining whether the contact application on the second device is enabled (step 310), if the contact application on the second device is enabled, transferring the contact information to the contact application on the second device (step 312), and if the contact application on the second device is not enabled, flagging the server to check the status of the second device at a later time (step 314). Method 300 is similar to method 200, except method 300 includes step 306 of sending contact information to a server, e.g., server 112, rather than directly to a second device. The server may perform the verification/authentication step described above, and send the information on to a second device.

Steps 302, 304, and 314 may be the same as or similar to steps 202, 204, and 212 described above and therefore are not described in detail here. During step 306, contact information from a first device is sent to a server, such as server 112, illustrated in FIG. 1. The server may be hosted by a carrier, in which case the contact applications would function as clients to the server. In accordance with exemplary embodiments of the invention, when authentication protocols, such as the protocols described above, are employed, the server authenticates users by passing keys between the server and users, rather than passing keys between users, as described above. In accordance with various aspects of these embodiments, a fee is charged for providing the authentication and/or storage services.

During step 310, the server, rather than the first contact application, determines whether the second application is enabled. If the second contact application is enabled, the information is provided by the server and to the second application in step 312. If the second contact application is not enabled, the updates are flagged in step 314 and stored on the server until the second contact application becomes enabled, at which time the server pushes the contact information to the second application. The server may monitor the second application and timeout using the same techniques described above in connection with method 200.

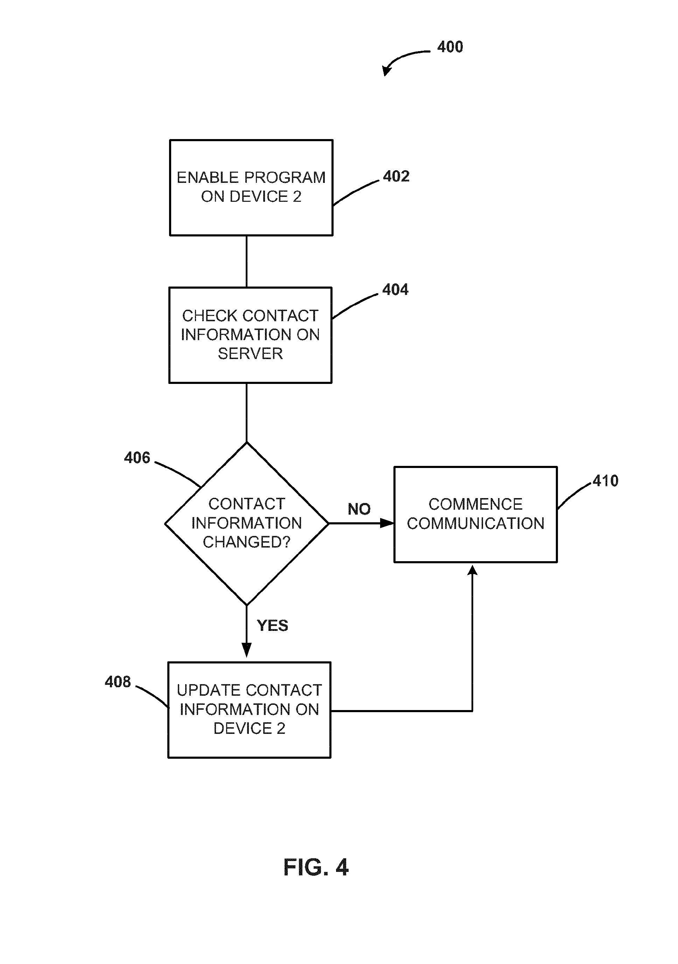

FIG. 4 illustrates a method 400 of providing contact information to a device in accordance with yet additional exemplary embodiments of the invention. Method 400 is similar to the methods described above, except method 400 takes a reactive approach to verifying contact information, and checks contact information prior to commencing communication. Contact information may be provided to a server from device 1 as described above in connection with FIG. 3 and therefore is not discussed in reference to FIG. 4.

Method 400 is illustrated with the steps of enabling a contact application on a second device (step 402), checking contact information on a server (step 404), determining whether the contact information has changed (step 406), and if the contact information has changed, updating the contact information on the second device (step 408) and then commencing communication (step 410), and if the information has not changed, commencing communication (step 410). Although not illustrated in FIG. 4, method 400 may additionally include the steps of entering contact information on a first device and providing the contact information to the server, as described above.

Step 402 may be similar to steps 202, 302 described in connection with device 1 and therefore is not described in detail here. During step 404, contact information is checked on a server. This step may be performed when a user attempts to communicate with another user. In this case, the contact application on the second device checks with the server for the latest contact information, and if the information on the server differs from the contact information on the second device, as determined in step 406, then the contact information is updated on the second device during step 408, which can be the same as steps 210, 312. If it is determined during step 406 that the information is the same on the server and the second device, then the communication commences. In accordance with exemplary aspects of these embodiments, the comparison of contact information can be calculated by computing an MD5 sum (as specified in the IETF's RFC 1321 document) of the client contact information and the information stored on the server. If the respective MD5 sums are different, then the contact information would be updated. Alternatively, a time stamp may be used to verify whether the contact information has changed. However, any suitable technique for comparing the information may be used.

To those skilled in the art will appreciate that it can easily be envisioned that changes to contact information can be initiated using a number of common practices including time of day, location, role, environment or other activity. Such changes may be based on pre-defined configurations. For example, upon arriving at home, a person's preferred contact information can be updated to reflect their home number rather than their mobile number. When leaving home, their home phone number may be removed from their contact list, and their mobile work number inserted instead. When arriving at work, their work number is added to their contact and given priority (so that callers will try the work number first). In addition, vehicles could be equipped with an independent communication device. In this case, when a user enters the vehicle, the user's contact information could be updated to reflect the vehicle's contact information.

In the case of carrier LTE networks where data enabled devices have a fixed IP address for the duration of mobile registration, VoIP communications, including point to point, can be considered. An individual can update their contact information with their current IP address to facilitate VoIP connectivity.

Similarly, when in private networks, the NAT'ed address and port can be provided as the contact address for VoIP communications in order to avoid tolls or carrier data usage.

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. It will be recognized that changes and modifications may be made to the exemplary embodiments without departing from the scope of the present invention. These and other changes or modifications are intended to be included within the scope of the present invention, as expressed in the following claims.

## Claims

1. A system for updating contact information associated with a user, the system comprising:
a first device comprising a first contact application comprising a first contact list; and
a second device comprising a second contact application comprising a second contact list;
wherein the first contact application provides first contact information to the second contact application using direct addressing.

2. The system for updating contact information associated with a user of claim 1, wherein the first contact list is native to the first device and wherein the second contact list is native to the second device.

3. The system for updating contact information associated with a user of claim 1 or claim 2, wherein the first contact application simultaneously provides contact information to a plurality of devices.

4. The system for updating contact information associated with a user of any one of claims 1 to 3, wherein the first contact list comprises contact information to bypass carrier toll charges and/or session initiation protocol (SIP) information.

5. The system for updating contact information associated with a user of any one of claims 1 to 4, wherein the first device is selected from the group consisting of smart phones, tablet computers, personal digital assistants, phones, and personal computers, and/or the communication is selected from one or more of voice, video, and data.

6. The system for updating contact information associated with a user of any one of the preceding claims, further comprising a server coupled to the first device and the second device.

7. A method of providing contact information, the method comprising:
enabling a first contact application on a first device;
updating first contact information using the first contact application;
checking the status of a second contact application on a second device; and
if the second contact application is enabled on the second device, updating the first contact information on the second contact application,
wherein the updating is performed using direct addressing.

8. The method of providing contact information of claim 7, wherein the first contact information is stored as native information on the second device.

9. The method of providing contact information of claim 7 or claim 8, wherein the checking is performed using point-to-point signalling, and/or updating the first contact information on the second contact application comprises transmitting the first contact information using LTE IP addressing.

10. The method of providing contact information of any one of claims 7 to 9, further comprising classifying a group of users.

11. The method of providing contact information of any one of claims 7 to 10, wherein updating the first contact information on the second contact application comprises simultaneously updating the first contact information on a plurality of devices, and/or if the second contact application is not enabled on the second device, flagging the first contact information to be updated at a later time.

12. The method of providing contact information of any one of claims 7 to 11, further comprising sending the first contact information to a server.

13. A method of providing contact information, the method comprising:
providing first contact information corresponding to a first device to a server;
enabling a contact application on a second device, the contact application comprising the first contact information;
checking the first contact information on the server;
determining whether the first contact information on the server and the first contact information on the second device are the same; and
if the first contact information on the server and the first contact information on the second device are not the same, updating the first contact information on the second device.

14. The method of providing contact information of claim 13, further comprising, if the first contact information on the server and the first contact information on the second device are the same, commencing communication between the first device and the second device.

15. The method of providing contact information of any one of claims 7 to 14, further comprising authenticating the second device, in which the authentication may use a security key.
